# EUROPÄISCHE PATENTSCHRIFT

(11) **EP 1 281 575 B1**
(45) Veröffentlichungstag und Bekanntmachung des Hinweises auf die Patenterteilung: **14.12.2005**
(21) Anmeldenummer: 02015984.4
(22) Anmeldetag: 18.07.2002
(51) Int. Cl.: B60R 7/04, B60R 7/06

(54) **Schienengleitkonsole für ein Kraftfahrzeug**
Sliding console for a vehicle
Console coulissante pour véhicule

(30) Priorität: 30.07.2001 DE 10137036
(43) Veröffentlichungstag der Anmeldung: 05.02.2003
(73) Patentinhaber: ADAM OPEL AG, 65423 Rüsselsheim (DE)
(72) Erfinder: Leopold, Frank, Dipl.-Designer, 65232 Taunusstein (DE); Verhee, Patrick, Dipl.-Ing., 65428 Rüsselsheim (DE); Treser, Walter, Dipl.-Ing., 65189 Wiesbaden (DE); Taffin, Dominique, Dipl.-Designer, 65183 Wiesbaden (DE)

(56) Entgegenhaltungen:
- EP-A- 0 949 138
- FR-A- 2 789 641
- FR-A- 2 791 622
- US-B1- 6 203 088
- "console centrale sur rails" IEEE TRANSACTIONS ON INFORMATION THEORY, IEEE INC. NEW YORK, US, Nr. 50, 11. Dezember 1987 (1987-12-11), Seite 21 XP002127877 ISSN: 0018-9448
- PATENT ABSTRACTS OF JAPAN vol. 012, no. 041 (M-666), 6. Februar 1988 (1988-02-06) & JP 62 194955 A (AISIN SEIKI CO LTD), 27. August 1987 (1987-08-27)

## Beschreibung

Die Erfindung betrifft ein Fahrzeug mit einem im Innenraum des Fahrzeuges in dessen Längsrichtung verschiebbaren Container zur Aufnahme von Gegenständen, sowie mit einer Armaturentafel, die eine Aussparung zum Einschieben des Containers aufweist, wobei der Container in seiner eingeschobenen Stellung bündig mit der Armaturentafel abschließt, sowie der Container auf mindestens einer Schiene verfahrbar ist, und Mittel zum Festlegen des Containers relativ zur Schiene vorgesehen sind.

Ein derartiges Fahrzeug ist aus der FR-A-2 791 622 bekannt. Bei diesem lässt sich der Container auf einer Schiene soweit nach vorne verfahren, bis er vollständig unterhalb der Armaturentafel angeordnet ist. Die Schiene reicht von dort bis zur hinteren Sitzreihe des Fahrzeuges, wobei dieses durchaus drei Sitzreihen aufweisen kann. Der Container kann nicht von der Schiene abgenommen werden. Der Container ist in vorbestimmter Position mit der Schiene festlegbar, und zwar mittels eines Betätigungshebels.

Ein Fahrzeug mit einem im Innenraum des Fahrzeuges in dessen Längsrichtung verschiebbaren Container zur Aufnahme von Gegenständen, wobei das Fahrzeug mit einer Armaturentafel versehen ist, ist ferner aus diversen Zeitschriften bekannt (Zeitungen "Welt am Sonntag", Ausgabe 12. November 2000, Seite 17, "Mainzer-Rhein-Zeitung", Sparte Politik/Wirtschaft/Industrie, Seite 2, Ausgabe vom 30. November 2000 und "Recklinghäuser Zeitung", Sparte "Produkte", Seite 12, Ausgabe vom 11. November 2000).

Dort ist die Studie eines neuen, frontgetriebenen Fahrzeuges beschrieben, das auf einen konventionellen Mitteltunnel mit Schalt- sowie Handbremshebel verzichtet. Die einzelnen Gangstufen werden stattdessen mit einem Drehschalter auf der Mittelkonsole gewählt. Zwischen den Sitzen bleibt dadurch Platz für ein System variabler Stau-Boxen. Auf einer in den Fahrzeugboden eingelassenen Schiene können mehrere kleine Container verschoben und an beliebiger Stelle zwischen Mittelkonsole und Rücksitzbank verankert werden. Beispielsweise Spielkonsolen für Kinder, eine Kühlbox für Getränke samt Becherhalter, eine mobile Büroausstattung oder eine Espresso-Bar lassen sich so griffbereit im Wagen unterbringen, im Gepäckraum verstauen und für ein Picknick oder eine Besprechung herausnehmen.

Aus der DE 198 08 381 A1 ist eine Multifunktionskonsole für ein Fahrzeug bekannt, insbesondere für die Fondsitzbank eines Personenkraftwagens. Zur Herstellung einer bestimmten, jeweils an unterschiedliche, individuelle Fahrzeugtypen und Fahrzeugmodelle angepassten Multifunktionskonsole ist ein Baukastensystem für Mittelarmkonsolen vorgesehen. Dieses besteht aus Grundkästen und fahrzeugindividuellen, mit jeweils wenigstens einem Grundkasten verbindbaren Befestigungsteilen. Durch Kombination eines bestimmten Grundkastens mit Befestigungsteilen ist eine Anpassung an individuelle Benutzungserfordernisse und an Einbau- und Energieanschlussgegebenheiten eines Fahrzeugs mit definierten Energieschnittstellen, Informationsschnittstellen und Befestigungsschnittstellen möglich.

Weitere, nicht verfahrbare Konsolen von Fahrzeugen, insbesondere Personenkraftwagen, sind aus der DE 44 36 420 C1 und DE 100 01 266 C1 bekannt.

Es ist Aufgabe der vorliegenden Erfindung, ein Fahrzeug zu schaffen, bei dem der Container bei Nichtgebrauch verstaut werden kann, ohne die Funktionalität des Innenraums negativ zu beeinflussen, und über dies ein einfaches Auswechseln des Containers möglich ist.

Gelöst wird die Aufgabe bei einem Fahrzeug der Eingangs genannten Art dadurch, dass die Schiene bis in den Kofferraum des Fahrzeugs geführt ist und die Mittel zum Festlegen des Containers als Klemmmittel ausgebildet sind, wobei in einer eingefahrenen Stellung der Klemmmittel der Container von der Schiene abhebbar ist.

In der eingeschobenen Stellung des Containers, der durchaus auch als Box oder Mittelkonsole bezeichnet werden kann, stellt das aus dem Container und dem darüber befindlichen Bereich der Armaturentafel sich ergebende Gebilde eine optische Baueinheit dar, wie eine Armaturentafel, die sich bis zum Fahrzeugboden erstreckt. Das Fahrzeug zeichnet sich dadurch, bei in die Aussparung der Armaturentafel eingeschobenem Container, durch die herkömmliche, vertraute Optik aus, ermöglicht aber andererseits den sonst frei konfigurierbaren Container zu verstauen, ohne das er im Innenraum hinderlich ist. Dies ist insbesondere bei der Ausbildung des Fahrzeugs als Van von Vorteil, da beispielsweise bei längeren Urlaubsfahrten durchaus Sitzplätze gewechselt werden und infolgedessen ohne weiteres vom Beifahrersitz zu einem hinteren Sitz umgestiegen werden kann.

Bei Ausbildung eines im Wesentlichen quaderförmigen Containers mit abgerundeten Kanten und horizontaler Oberfläche weist die Armaturentafel im Bereich ihrer Aussparung eine im Wesentlichen horizontale, untere Fläche auf. Diese Aussparung reicht nach Möglichkeit bis zum vorderen Ende der Fußräume der vorderen Sitze.

Die Möglichkeit, den Container in die Aussparung der Armaturentafel einschieben zu können, trägt erheblich dazu bei, die Sicherheitsstandards aufrecht zu erhalten, insbesondere unter dem Aspekt der Crashsicherheit. Die Mittel zum Festlegen des Containers relativ zur Schiene ermöglichen insbesondere die Festlegung des Containers an beliebiger Stelle der Schiene, bezogen auf deren Längserstreckung. Auch bei aus der Aussparung der Armaturentafel herausgezogenem Container muss die sichere Verbindung zwischen der mindestens einer Schiene und dem Container gewährleistet sein. Die Mittel zum Festlegen des Containers sind als Klemmmittel ausgebildet. In der eingefahrenen Stellung der Klemmmittel ist der Container von der Schiene abhebbar. Dies ermöglicht es Container einfach auszuwechseln.

Gemäß einer besonderen Weiterbildung ist vorgesehen, dass die Schiene bzw. die Schienen mit einer Stromzuführung für den Container versehen sind und der Container mit elektrischen Aggregaten bestückt ist. Die in aller Regel nicht unmittelbar auf dem Fahrzeugboden sondern auf dem Mitteltunnel angeordnete Schiene bzw. angeordneten Schienen erlauben es dem Container bzw. mehreren Containern an beliebiger Stelle Strom zuzuführen.

In den Figuren ist die Erfindung anhand eines Ausführungsbeispiels dargestellt, ohne hierauf beschränkt zu sein. Es zeigt:
- Fig. 1: eine räumliche Ansicht eines Ausschnittes eines PKW-Innenraumes mit aus der Aussparung der Armaturentafel herausgezogenem Container,
- Fig. 2: eine Ansicht gemäß Fig. 1, veranschaulicht bei eingeschobenem Container,
- Fig. 3: in schematischer Ansicht eine räumliche Darstellung der Lagerung des Containers in einer dem Mitteltunnel zugeordneten Schiene,
- Fig. 4: in einer Draufsicht den in den Container integrierten Klemmmechanismus,
- Fig. 5: einen Schnitt durch den Lagerbereich des Containers gemäß der Linie V-V in Fig. 3 und
- Fig. 6: einen Schnitt durch den Lagerbereich gemäß der Linie VI-VI in Fig. 3.

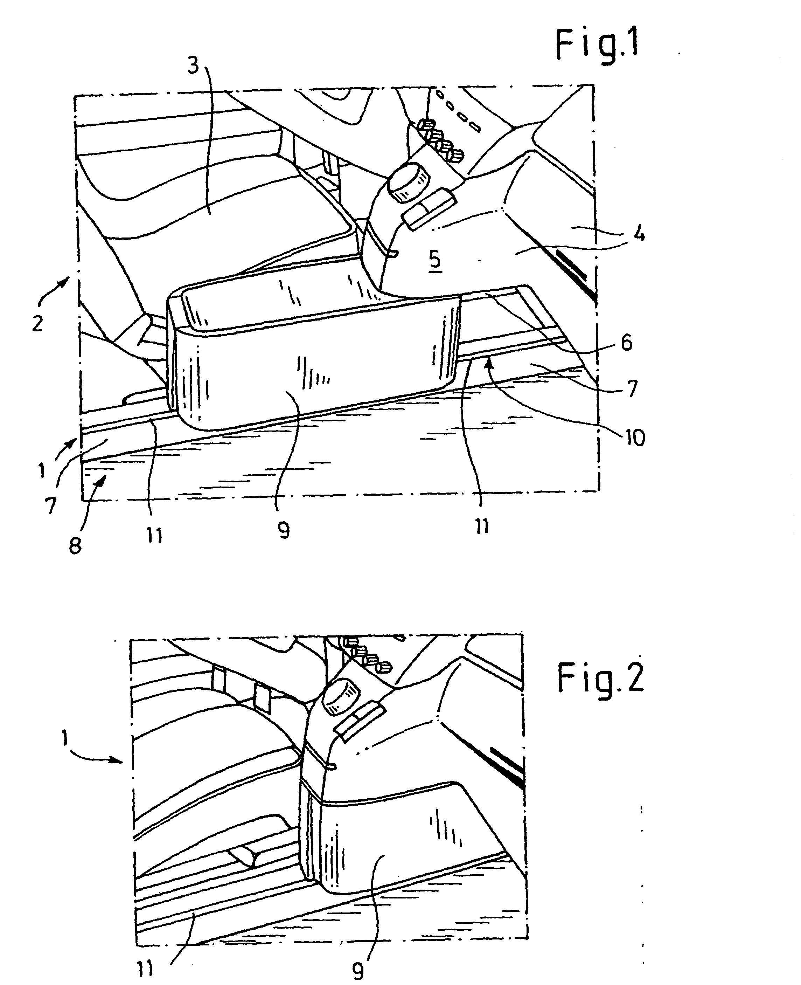

Die Figuren 1 und 2 zeigen einen Ausschnitt des Innenraumes 1 eines Personenkraftwagens, gesehen aus der Position des Beifahrersitzes, in der Richtung des Fahrersitzes 2, dessen Sitzfläche mit der Bezugsziffer 3 bezeichnet ist. Vor dem Fahrersitz 2 und dem nicht gezeigten Beifahrersitz befindet sich die Armaturentafel 4 des Fahrzeuges. Diese ist in ihrem zwischen den beiden vorderen Sitzen befindlichen Bereich 5 in den Innenraum 1 hineingezogen, erstreckt sich demnach vom Hauptbereich der Armaturentafel 4 weg in Richtung des Fahrzeughecks. Die Armaturentafel 4 weist in ihrem Bereich 5 eine untere, horizontale Abschlussfläche 6 auf. Zwischen dieser und einem horizontalen Abschnitt 7 des Mitteltunnels 8 des Fahrzeuges ergibt sich somit ein Freiraum. Dieser dient der Aufnahme eines Containers 9, der in Fig. 2 in seiner eingeschobenen Stellung gezeigt ist. Der Container dient der Aufnahme beliebiger Gegenstände und kann die unterschiedlichsten Funktionen beinhalten, beispielsweise der Aufnahme von CDs dienen oder eine elektrische Kühlbox darstellen.

Wie der Darstellung der Fig. 2 zu entnehmen ist, schließt der Container 9 in seiner in die Aussparung 10 der Armaturentafel 4 eingeschobenen Stellung bündig mit der Armaturentafel 4 ab. Seine hintere Kontur sowie seine seitlichen Konturen stimmen mit der hinteren und den seitlichen Konturen der Armaturentafel 4 in derem Bereich 5 überein. Optisch erscheint dieser mittlere Bereich des Innenraumes 1 somit als bis zum Mitteltunnel 8 gestaltete Armaturentafel 4.

Die Höhe des Containers 9 entspricht im Wesentlichen dem vertikalen Maß der Aussparung 10. Der Container 9 weist im Wesentlichen quaderförmigen Querschnitt auf und ist mit abgerundeten Kanten versehen. Er ist in einer Schiene 11 gelagert und geführt, die mit dem Mitteltunnel 8 verbunden ist. Die Schiene 11 erstreckt sich in Längsrichtung des Fahrzeuges. Der Fig. 1 ist zu entnehmen, dass die Schiene 11 bis in den Bereich hinter dem Fahrersitz 2 ragt; sie erstreckt sich bis in den Kofferraum.

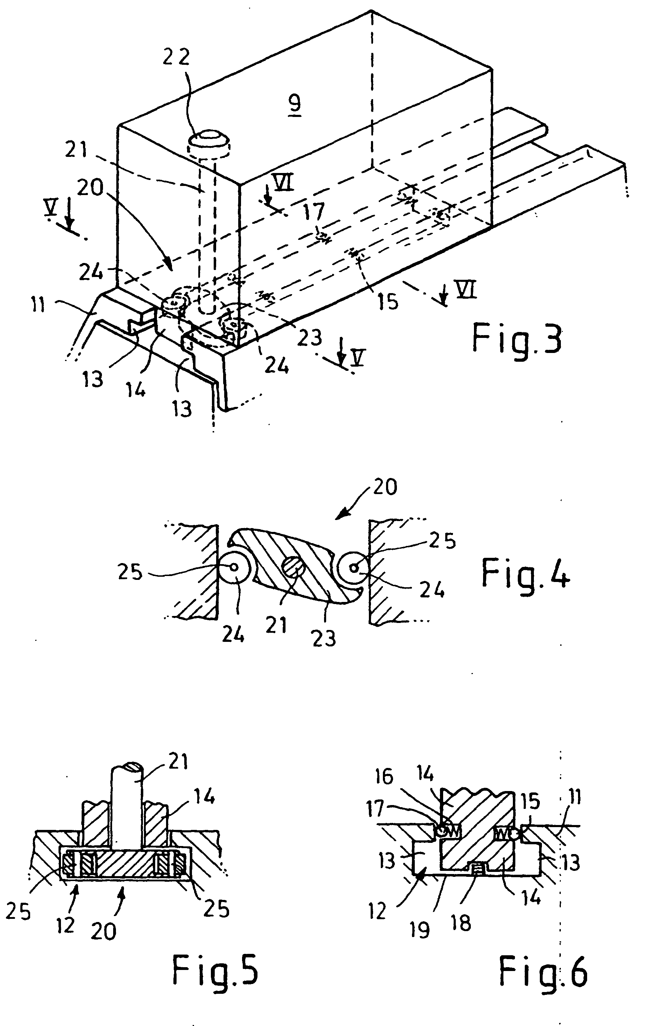

Die Fig. 3 zeigt eine bevorzugte Lagerung des Containers 9 in der Schiene 11. Die Schiene weist ein T-Profil 12 auf, mit hinterschnittenen Bereichen 13. Der Container 9 ist auf seiner Unterseite mit einem Ansatz 14 versehen, der, in der Vertikalen betrachtet, einen rechteckigen Querschnitt aufweist, wobei die Breite dieses Ansatzes 14 geringfügig geringer bemessen ist als die Breite des T-Profils 12 im nicht hinterschnittenen Bereich 15.

In die Längsseiten des Ansatzes 14 integrierte, mittels Federn 16 belastete Kugeln 17 stützen sich an der Schiene 11 im nicht hinterschnittenen Bereich 15 ab. In die Unterseite des Ansatzes 14 eingelassene Rollen 18 stützen sich auf der Grundfläche 19 der Schiene 11 im Bereich des T-Profiles 12 ab. Die beschriebene Lagerung ermöglicht ist, den Container 9 frei in der Schiene 11 zu verschieben.

Um den Container 9 relativ zur Schiene 11 blockieren zu können, ist im mittleren Bereich des Containers 9 eine Klemmvorrichtung 20 gelagert. Diese weist eine vertikale, im Container 9 axial gelagerte Welle 21 auf, deren oberes Ende, das aus dem Container 9 ragt, mit einen versenkten Drehknopf 22 fest verbunden ist. Das unten aus einem Rücksprung des Ansatzes 14 ragende Wellenende ist drehfest mit einem Doppelhebelelement 23 verbunden, dessen beide äußeren Enden Klemmrollen 24 aufnehmen, die um Achsen 25 frei drehbar sind. Diese Achsen 25 sind parallel zur Welle 21 angeordnet. Die Vorrichtung 20 ist zu bemessen, dass bei einer nicht ganz senkrecht zur Längserstreckung der Schiene 11 orientierten Anordnung des Doppelhebelelementes 23 dessen Klemmrollen 24 gegen die seitlichen Flächen der hinterschnittenen Bereiche 13 des T-Profils 12 gedrückt werden. Sobald das Doppelhebelelement 23 in eine Orientierung in Richtung der Längsachse der Schiene 11 bewegt wird, gelangen die Klemmrollen 24 außer Eingriff bezüglich der hinterschnittenen Bereiche 13 des T-Profiles 12. In dieser Position kann der Container 9 frei in der Schiene 11 verschoben werden.

## Patentansprüche

1. Fahrzeug mit einem im Innenraum (1) des Fahrzeuges in dessen Längsrichtung verschiebbaren Container (9) zur Aufnahme von Gegenständen, sowie mit einer Armaturentafel (4), die eine Aussparung (10) zum Einschieben des Containers (9) aufweist, wobei der Container (9) in seiner eingeschobenen Stellung bündig mit der Armaturentafel (4) abschließt, sowie der Container (9) auf mindestens einer Schiene (11) verfahrbar ist, und Mittel (20) zum Festlegen des Containers (9) relativ zur Schiene (11) vorgesehen sind, **dadurch gekennzeichnet, dass** die Schiene (11) bis in den Kofferraum des Fahrzeugs geführt ist und die Mittel (20) zum Festlegen des Containers (9) als Klemmmittel ausgebildet sind, wobei in einer eingefahrenen Stellung der Klemmmittel der Container (9) von der Schiene (11) abhebbar ist.

2. Fahrzeug nach Anspruch 1, **dadurch gekennzeichnet, dass** die Schiene (11) in den Boden (8) des Fahrzeuges eingelassen ist.

3. Fahrzeug nach Anspruch 1 oder 2, **dadurch gekennzeichnet, dass** die Schiene (11) bzw. Schienen mit einer Stromzuführung für den Container (9) versehen ist bzw. sind und der Container (9) mit elektrischen Anschlüssen bestückt ist.

## Claims

1. Vehicle having a container (9) for holding articles that is displaceable in the interior (1) of the vehicle in longitudinal direction thereof, as well as having an instrument panel (4) that has a recess (10) for insertion of the container (9), wherein the container (9) in its inserted position ends flush with the instrument panel (4), and the container (9) is movable on at least one rail (11), and means (20) are provided for fastening the container (9) relative to the rail (11), **characterized in that** the rail (11) extends right into the luggage compartment of the vehicle and the means (20) for fastening the container (9) take the form of clamping means, wherein in a retracted position of the clamping means the container (9) can be lifted off the rail (11).

2. Vehicle according to claim 1, **characterized in that** the rail (11) is let into the floor (8) of the vehicle.

3. Vehicle according to claim 1 or 2, **characterized in that** the rail (11) or rails is or are provided with a power supply for the container (9) and the container (9) is equipped with electrical connections.

## Revendications

1. Véhicule avec un récipient (9) pouvant coulisser dans l'espace intérieur (1) du véhicule dans son sens longitudinal pour le logement d'objets, et avec un tableau de bord (4), qui présente un évidement (10) pour l'introduction par coulissement du récipient (9), le récipient (9) se terminant dans sa position rentrée en affleurement avec le tableau de bord (4), et le récipient (9) pouvant être déplacé sur au moins un rail (11), et des moyens (20) étant prévus pour la fixation du récipient (9) par rapport au rail (11), **caractérisé en ce que** le rail (11) est guidé jusque dans le coffre à bagages du véhicule et **en ce que** les moyens (20) pour la fixation du récipient (9) sont réalisés sous la forme de moyens de coincement, le récipient (9) pouvant être soulevé du rail (11) lorsque les moyens de coincement sont dans une position rentrée.

2. Véhicule selon la revendication 1, **caractérisé en ce que** le rail (11) est emboîté dans le plancher (8) du véhicule.

3. Véhicule selon la revendication 1 ou 2, **caractérisé en ce que** le rail (11) ou les rails est ou sont munis d'une arrivée de courant pour le récipient (9) et le récipient (9) est équipé de branchements électriques.
